# EUROPÄISCHE PATENTANMELDUNG

(11) **EP 1 529 627 A1**
(43) Veröffentlichungstag der Anmeldung: **11.05.2005**
(21) Anmeldenummer: 04104745.7
(22) Anmeldetag: 29.09.2004
(51) Int. Cl.: B29D 30/06, B29C 33/38, B24C 5/02, B26F 3/00

(54) **Verfahren zum Bearbeiten eines Formsegments einer Vulkanisationsform für Fahrzeugreifen und danach hergestelltes Formsegment**

(30) Priorität: 04.11.2003 DE 10352148
(71) Anmelder: Continental Aktiengesellschaft, 30165 Hannover (DE)
(72) Erfinder: Wenzel, Karsten, 31691 Helpsen (DE)

(57) **Zusammenfassung**

Die Erfindung betrifft einVerfahren zum Bearbeiten eines Formsegmentes einer Vulkanisationsform für Fahrzeugreifen, das dadurch gekennzeichnet ist, dass wenigstens eine Oberfläche des Formsegmentes der Reifenvulkanisationsform mit einem Wasserstrahl hohen Drucks beaufschlagt wird, wobei der Wasserstrahl entsprechend der gewünschten Form einer zu erzeugenden Ausnehmung entlang der Oberfläche des Formsegmentes geführt wird, wobei die derart erzeugte Ausnehmung eine lichte Weite von 0,2 - 1 mm, vorzugsweise von 0,2 - 0,4 mm, aufweist.

## Beschreibung

Die Erfindung betrifft ein Verfahren zum Bearbeiten eines Formsegments einer Vulkanisationsform für Fahrzeugreifen und ein nach diesem Verfahren hergestelltes Formsegment.

Unter Formsegmenten im Sinne dieser Erfindung werden zu einem Ring verbindbare Formstücke zur Erzeugung von Laufflächenprofilen in Fahrzeugluftreifen verstanden. Die Formsegmente weisen eine Formfläche zur Profilierung des Reifens auf und kommen in ihrer zur Vulkanisationsform arrangierten Anordnung derart nebeneinander zu liegen, dass sie die Negativform eines zu profilierenden Fahrzeugreifens, beispielsweise eines Winterreifens, darstellen. Zur Profilierung des Reifens weist die Formfläche verschiedenen Formteile, wie beispielsweise Formrippen oder Lamellen auf. Die breiteren Formrippen sind einstückig aus der Formfläche ausgeformt oder mit dieser beispielsweise über eine Schweißnaht verbunden. Die schmaleren Lamellen werden, um eine ausreichend feste Verbindung mit der Formfläche herstellen zu können, in eine Ausnehmung in der Formfläche eingesetzt und darin befestigt. Die Formsegmente selbst werden heutzutage vorwiegend aus einem massiven Block herausgefräst, wobei das Material des Blockes üblicherweise Aluminium oder eine Aluminiumlegierung ist. Für besondere Anwendungsbereiche werden aber auch Formen aus Stahl verwendet.

Ein besonderes Problem bei der Herstellung von Formsegmenten, dem sich insbesondere die DE 101 31 130 A1 widmet, ist die Befestigung der Lamellen bzw. Lamellenbleche im Formsegment. Bevor die Lamellenbleche jedoch im Formsegment befestigt werden können, ist es zunächst erforderlich, einen entsprechend der Form des Lamellenblechs geformten Schlitz oder Spalt mit einer üblichen Tiefe von 2 bis 4 mm in das Formsegment einzubringen. Die Schlitze selbst mit einer Weite von 0,4 bis 1 mm wurden bislang mittels Fräsen oder mittels Laser aus der Formfläche herausgearbeitet, bekannt sind aber auch Verfahren, bei denen mittels Senkerodieren in die Formfläche eingebracht werden.

Die genannten Verfahren zum Erzeugen von Ausnehmungen in Form von Schlitzen oder Spalten in die Formfläche haben sich bewährt, wobeisich mit diesen Verfahren eine minimale Weite der Ausnehmungen von 0,4 mm erzeugen lassen. Diese Grenze des Machbaren von 0,4 mm Breite bzw. Weite war bislang auch problematisch, da die mit den in den Ausnehmungen eingesetzten Lamellen erzeugten Feineinschnitte im Laufflächenprofil von Luftreifen als völlig ausreichend angesehen wurden, da eine Breite der entsprechend resultierenden Feineinschnitte in Profilblöcken insbesondere von Winterreifen ein Breite/Weite von 0,5 bis 1 mm aufweisen, was für die Reifeneigenschaften als ausreichend angesehen wurde.

Das künftige Ziel bezüglich von Feineinschnitten, insbesondere von Laufflächenprofilen von Winterreifen, ist aber eine möglichst hohe Anzahl sehr feiner Feineinschnitte, um eine möglichst hohe Anzahl an wirksamen Kanten bei Fahrt auf Eis und Schnee zu erzeugen, wobei gleichzeitig gute Fahreigenschaften auf trockenen Fahrbahnen erhalten bleiben sollen. Dieses Ziel scheiterte bislang daran, dass, wie erwähnt, die Ausnehmungen nicht fein genug bezüglich der Weite ausführbar waren.

Der Erfinder überwindet dieses Hindernis mit einem Verfahren mit den Merkmalen des Patentanspruchs 1.

Erfindungsgemäß ist vorgesehen, dass das Formsegment der Vulkanisationsform für Fahrzeugreifen mit einem Wasserstrahl hohen Drucks beaufschlagt wird, wobei der Wasserstrahl entsprechend der gewünschten Form der zu erzeugenden Ausnehmung entlang der Oberfläche des Formsegmentes geführt wird, wobei die derart erzeugte Ausnehmung eine lichte Weite von 0,2 bis 0,6 mm, vorzugsweise von 0,2 bis 0,4 mm, aufweist.

Der Erfinder hat die üblichen bekannten Wege zur Erzeugung derartiger Ausnehmungen verlassen und setzt zur Erzeugung sehr feiner Schlitze und Spalte in Formsegmenten von Vulkanisationsformen für Fahrzeugreifen das Verfahren der Wasserstrahltechnik ein, das bislang nicht für den Bereich der Herstellung von Reifenvulanisationsformen eingesetzt wurde, da andere Verfahren ausreichend schienen und sich wirtschaftlich und technologisch lange bewährt hatten.

In Weiterbildung der Erfindung ist vorgesehen, dass ein Wasserabrasivinjektorstrahl verwendet wird, d. h. ein Wasserstrahl, dem feinstkörniges Abrasivmaterial beigegeben ist. Alternativ ist vorgesehen, bei dem Verfahren ein Suspensionswasserstrahl einzusetzen.

Zur Durchführung des Verfahrens eignen sich Geräte, welche in der Lage sind, einen entsprechenden Wasserstrahl bis etwa 400 mPa und einer Strahldicke von 0,1-1 mm auf die Werkstückoberfläche aufzubringen. Es hat sich als besonders vorteilhaft erwiesen, dass sich die Tiefe des mittels Wasserstrahlverfahrens einzubringenden Schnittes frei und sehr fein einstellen lässt. Im Bedarfsfall ist es möglich, die Tiefe der Ausnehmungen über die oben genannten 4 mm hinaus zu erweitern, also auch das Formsegment vollständig zu durchdringen.

Nachdem das jeweilige Formsegment vollständig mit der gewünschten Anzahl an Ausnehmungen versehen ist, werden die Lamellenbleche in herkömmlicher Weise in die Ausnehmungen eingesetzt und mit dem Formsegment verbunden.

Es ist auch möglich, den Wasserstrahl punktförmig auf eine bestimmte Stelle der Oberfläche des Formsegmentes zu halten, bis der Wasserstrahl das Formsegment durchdringt. Auf diese Weise entsteht beispielsweise eine Durchbohrung, die beispielsweise zur Entlüftung der Form verwendet werden kann.

## Patentansprüche

1. Verfahren zum Bearbeiten eines Formsegmentes einer Vulkanisationsform für Fahrzeugreifen,
**dadurch gekennzeichnet,**
**dass** wenigstens eine Oberfläche des Formsegmentes der Reifenvulkanisationsform mit einem Wasserstrahl hohen Drucks beaufschlagt wird, wobei der Wasserstrahl entsprechend der gewünschten Form einer zu erzeugenden Ausnehmung entlang der Oberfläche des Formsegmentes geführt wird, wobei die derart erzeugte Ausnehmung eine lichte Weite von 0,2 - mm, vorzugsweise von 0,2 - 0,4 mm, aufweist.

2. Verfahren zum Bearbeiten eines Formsegmentes einer Vulkanisationsform für Fahrzeugreifen nach Anspruch 1,
**dadurch gekennzeichnet, dass** dem Wasserstrahl vor Beaufschlagung auf die Oberfläche des Formsegmentes abrasive Stoffe beigegeben werden.

3. Verfahren zum Bearbeiten eines Formsegmentes einer Vulkanisationsform für Fahrzeugreifen nach Anspruch 1, **dadurch gekennzeichnet, dass** dem Wasserstrahl vor Beaufschlagung auf die Oberfläche des Formsegmentes eine Suspension beigegeben wird.

4. Verfahren zum Bearbeiten eines Formsegmentes einer Vulkanisationsform für Fahrzeugreifen nach Anspruch 1, **dadurch gekennzeichnet, dass** der Wasserstrahl so lange auf eine punktförmige Stelle der Oberfläche des Formsegmentes gerichtet wird, bis der Wasserstrahl den Block vollständig durchdringt.

5. Formsegment einer Vulkanisationsform für Fahrzeugreifen, **dadurch gekennzeichnet, dass** wenigstens eine Oberfläche des Formsegmentes der Reifenvulkanisationsform wenigstens eine Ausnehmung mit einer lichte Weiten von 0,2 - 1 mm, vorzugsweise von 0,2 - 0,4 mm, aufweist, wobei in diese Ausnehmung ein Formwerkzeug zur Bearbeitung des Laufstreifens des zu vulkanisierenden Fahrzeugreifens einsetzbar ist.
